# EUROPEAN PATENT SPECIFICATION

(11) **EP 0 659 660 B1**
(45) Date of publication and mention of the grant of the patent: **09.04.1997**
(21) Application number: 94120221.0
(22) Date of filing: 20.12.1994
(51) Int. Cl.: B65G 1/04

(54) **Procedure and apparatus for the handling of paper rolls**
Verfahren und Vorrichtung zur Handhabung von Papierrollen
Procédé et dispositif de manutention de rouleaux de papier

(30) Priority: 20.12.1993 FI 935758
(43) Date of publication of application: 28.06.1995
(73) Proprietor: KCI Konecranes International Corporation, 05830 Hyvinkää (FI)
(72) Inventor: Piispanen, Hannu, SF-05800 Hyvinkää (FI)
(74) Representative: Zipse + Habersack

(56) References cited:
- FR-A- 2 491 891
- US-A- 5 087 164
- BETRIEBSTECHNIK, vol.34, no.5, May 1993, GRAFELFING pages 39 - 40, XP369414 'Mobile Lagerplätze für schwere Brocken'

## Description

The present invention relates to a procedure for the handling of paper rolls as defined in the preamble of claim 1.

Traditionally, paper rolls are stored either in a horizontal or a vertical position. Storing the rolls in a vertical position allows several rolls to be placed on top of each other, but the problem is generally that the bottommost rolls cannot be extracted from under the top rolls. If the roll needed at a given time happens to be the bottommost one, the rolls on top of it have to be removed first. This again requires free space and retards the process. In any case, paper rolls provided with a spindle cannot be stored in a vertical position.

In the case of horizontal storage, paper rolls can traditionally only be placed in one tier. This requires plenty of space and is therefore an expensive storage method.

The object of the present invention is to eliminate the drawbacks mentioned above and to achieve a reliable, advantageous and space-saving procedure for the handling of paper rolls during storage and translocation. The procedure of the invention is characterized by what is presented in claim 1. The invention also relates to an apparatus as defined in the preamble of claim 3. The apparatus is characterized by what is presented in the characterization part of claim 3. Other embodiments of the invention are characterized by the features presented in the other claims.

The solution of the invention provides the advantage of a low space requirement and a high storage capacity. The capacity is increased by approximately one third as compared with previously known technology. A further advantage is that all paper rolls can be handled without removing other rolls to make way for those to be handled.

In the following, the invention is described in detail by the aid of an application example by referring to the attached drawings, in which
- Fig. 1.: presents a crane and a paper roll storage in side view,
- Fig. 2.: presents a crane and a paper roll storage in top view, and
- Fig. 3: presents a load device and a two-tier row of paper rolls as seen from one end of the storage area.

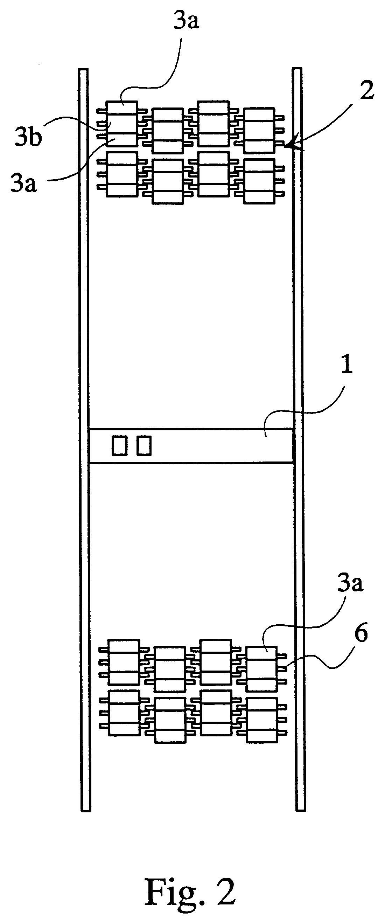

The procedure of the invention for the handling of paper rolls 3 is based on the relative positions of the storing places with respect to each other and on the synchronization of the hoisting and traversing movements of the crane 1. The paper rolls 3 are stored by placing several rolls in succession and side by side in the storage 2. Hereinafter, 'paper rolls placed in succession' means rolls that are placed successively in the direction of the radius of the rolls, and 'rolls placed side by side' means rolls placed successively in the axial diretion of the rolls. Thus, fig. 2 presents four rows of rolls placed side by side, but for the sake of clarity only the rolls at the ends of the storage space are shown. In addition, the rolls are stored in two tiers in such manner that, of successive rolls in the same row, every third roll 3b lies at a higher level than the rolls 3a in the lower tier.

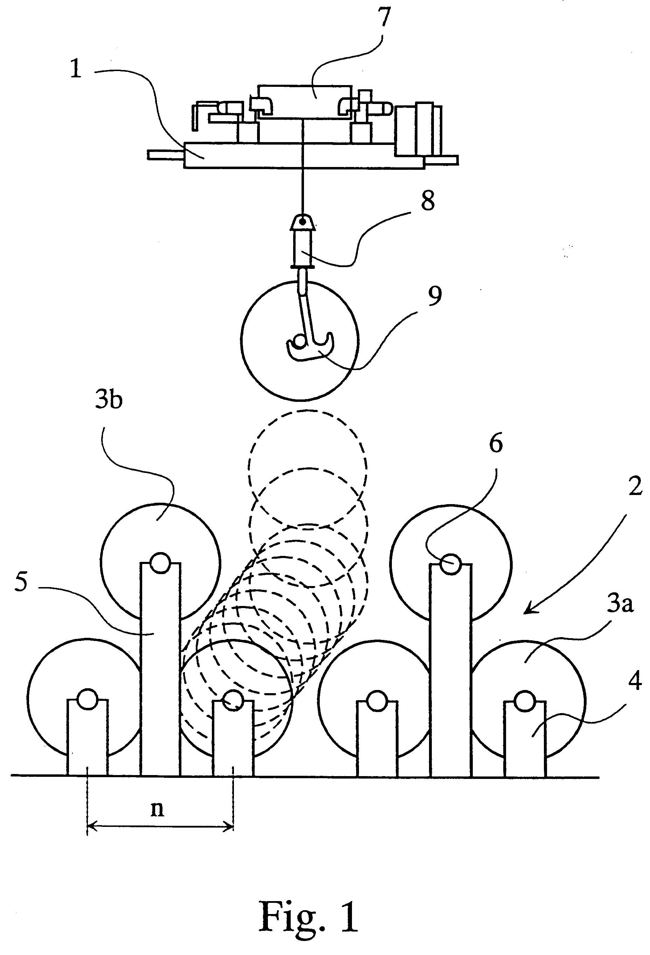

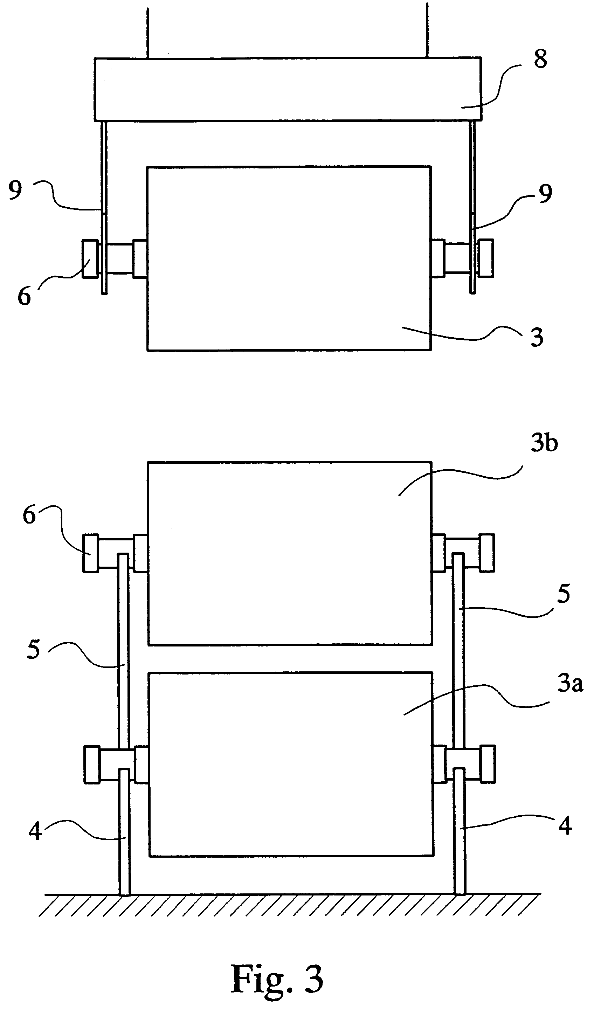

Each paper roll 3 to be stored is provided with a spindle 6 supporting the roll in a substantially horizontal position in its storing place, which consists of two low supports 4 placed at a distance about equal to the length of the roll from each other for each bottom-tier roll 3a and two high supports 5 placed at a distance about equal to the length of the roll from each other for each top-tier roll 3b. In the direction of succession of the rolls, i.e. in the lengthwise direction of the row of rolls, the positions of the supports 4 and 5 are so defined that one high support and two low supports together form a separate group. The high support 5 in the group is placed symmetrically between the two low supports 4 as indicated by fig. 1. The distances between successive supports 4 and 5 in a group are so chosen with respect to the diameters of the rolls that the bottom-tier rolls in the group lie symmetrically below the top-tier roll of the same group. Thus, the top-tier roll lies partly over the bottom-tier rolls. Similarly, the dimensions of the high support 5 and of the two low supports 4 are such that a sufficient clearance is left between the top-tier roll 3b and the bottom-tier rolls 3a when the rolls rest on their supports. This is clearly illustrated by fig. 3. The low supports 4 in the same group are all of equal height.

As seen in the direction of the row of rolls, the first roll of the next group is a bottom-tier roll 3a, the second one is a top-tier roll 3b and the third one, i.e. the last roll in the group, is again a bottom-tier roll 3a. For the operability of the system, the distance between the top-tier roll of a group and the bottom-tier roll of the next group is very important. The distance between these rolls is sufficient to enable a bottom-tier roll to be lifted up through the space between them and, similarly, to lower a roll onto a bottom-tier support 4. The figure shows one way of placing the supports in the storage space. In this case, all the bottom-tier supports 4 are placed at equal distances from each other, this distance being indicated by the letter "n". Successive top-tier supports are also placed at equal distances from each other, and this distance is "2n", i.e. twice the distance between the bottom-tier supports. The top-tier support 5 is placed symmetrically between the bottom-tier supports 4 of its group as seen in the lengthwise direction of the row of rolls, so that the horizontal distance between supports 4 and support 5 of the same group equals half the horizontal distance between the bottom-tier supports, i.e. "n/2". The diameter of the paper roll is smaller than the distance "n". Also, the difference between the heights of the top-tier and bottom-tier roll seats is smaller than the distance "n" but larger than the diameter of the roll. In addition, to reduce the space requirement, the rows of rolls can be so arranged that the spindles of adjacent rolls partially overlap each other, as illustrated by fig. 2. In this way, the storage space can be made narrower. The roll spindle seat at the top of the supports 4 and 5 is designed to accommodate a roll of maximum diameter.

The paper rolls are handled, i.e. lifted, lowered and moved by means of a crane 1 having a bar-like load device 8 connected to its hoisting gear 7 and hanging freely on a hoisting rope. Each end of the load device 8 is provided with a load hook 9, by means of which the roll is lifted by its spindle 6. The horizontal distance between the load hooks is such that the hooks fit on the spindle 6 either inside or outside the supports 4,5. The paper rolls can be handled either under manual or automatic control. The system incorporates automatic swing suppression for manual operation because the bottom-tier roll 3a is hoisted through a narrow gap and collisions between rolls must be prevented. For automatic operation, the load device is programmed to move along a desired path, which in this example is a curved one. A theoretic path for the hoisting of a bottom-tier roll 3a is e.g. as follows: First a hoist directly upwards, then a rectilinear hoist in an oblique direction until the roll reaches the space between two top-tier rolls 3b and finally a hoist directly upwards, whereupon the roll is moved to a desired place. The oblique rectilinear movement actually consists of simultaneous vertical and horizontal movements. In practice, a slight swinging, damped to an allowed range, renders the theoretic path curvilinear. If the load is rigidly interlocked with the hoisting trolley e.g. by means of a telescopic or scissor element, the theoretic path can be nearly achieved in practice. However, the interlocking mechanism increases the price of the equipment. The hoisting movement can also be performed in a stepwise manner, in which case the roll is moved in short steps upwards, sideways, upwards, and so on. The supports may even be provided with a guide for guiding the spindle on the theoretic path when hoisted or lowered.

In the procedure of the invention for the handling of paper rolls, each roll is brought into the storage space and lowered to its place by means of a load device. Appropriate information about the roll and its location in the storage is stored in a stock bookkeeping system in the memory of a computer for later use. The location data consists e.g. of a spindle number X indicating the supports 4 or 5 on which the roll is placed. If a roll brought into the storage is to be placed in the bottom tier, it is lowered to its place by a procedure converse to the hoisting operation. In this case, the roll is first moved by means of the crane to a position above the top-tier rolls 3b lying closest to the intended storing place, whereupon the roll is lowered through the space between the top-tier rolls first directly downwards, then obliquely downwards and finally directly down to its spindle seat.

It is obvious to a person skilled in the art that the invention is not restricted to the example described above, but that its embodiments may instead be varied within the scope of the claims presented below. Thus, the storage can be constructed using equal distances between roll supports, in which case, as seen in the direction of the row of rolls, every second roll is a bottom-tier roll and, correspondingly, the rolls in between are top-tier rolls. The vertical distance between the levels of the spindle seats of bottom-tier rolls and top-tier rolls is so selected that a bottom-tier roll can be lifted up from its spindle seat and removed in its axial direction over its own support unobstructed by a top-tier roll. The gap between rolls as seen in the direction of the row of rolls is such that the hooks or equivalent hoisting elements of a load device can be lowered through the space between top-tier rolls onto bottom-tier rolls. The two-tier rows of rolls are laid out e.g. in an arrangement in which there is one row on an outermost side of the storage space, next a passage slightly wider than the row of rolls, then two rows side by side and again a passage, and finally a single row of rolls on the other extremity of the space. This solution has the advantage that only rectilinear movements are required to move the rolls, i.e. sideways horizontal movements and vertical hoisting movements. This makes it easy to control the crane, especially in manual operation. Another advantage is that a passage is provided beside each row of rolls, facilitating e.g. maintenance. Guiding struts connected to the supports may be provided to guide the rolls on an optimal path when being hoisted or lowered. This facilitates the hoisting operation in the curved hoisting path. The guide may be provided at least at the bottom-tier supports.

## Claims

1. Procedure for the handling of paper rolls, in which procedure the stored paper rolls are kept in a horizontal position on supports (4,5) in a storage (2), **characterized** in that the paper rolls are stored in two tiers in such manner that a top-tier roll (3b) lies partly above a bottom-tier roll (3a) and that, when a bottom-tier roll is being moved into or out of its place, besides being moved in a vertical direction, it is also moved in a horizontal direction below the top-tier roll.

2. Procedure according to claim 1, **characterized** in that the paper rolls are so arranged in the storage that, when a bottom-tier roll (3a) is being hoisted, the hoisting movement is performed along a substantially curvilinear path in such manner that the hoisting movement first occurs in a direction mainly straight up, then obliquely sideways and upwards and finally directly upwards.

3. Apparatus for the handling of paper rolls, which apparatus consists of a crane (1) comprising a hoisting machinery (7) and a load device (8) provided with hoisting elements such as hooks (9) and of a storage space (2) for paper rolls (3) stored in a horizontal position, **characterized** in that the paper rolls are arranged in the storage in two tiers such that, except for the extreme ends of the rows, each top-tier roll (3b) is preceded and followed in the lengthwise direction of the row of rolls by at least one bottom-tier roll (3a).

4. Apparatus according to claim 3, **characterized** in that the paper rolls are arranged in the storage in two tiers such that between each two storing places for a top-tier roll (3b) there are at least two storing places for a bottom-tier roll (3a).

5. Apparatus according to claim 4, **characterized** in that the storing places for bottom-tier rolls (3a) consist of supports (4) arranged at equal distances from each other, and that the storing places for top-tier ross (3b) consist of supports (5) arranged at equal distances from each other, this distance being twice as long as the distance between the supports (4) for bottom-tier rolls.

## Patentansprüche

1. Verfahren zur Handhabung von Papierrollen, bei welchem die gelagerten Papierrollen in einer horizontalen Position auf Stützen (4, 5) in einem Lager (2) gehalten werden, dadurch gekennzeichnet, daß die Papierrollen in zwei Lagen derart gelagert werden, daß eine Rolle (3b) der oberen Lage teilweise über einer Rolle (3a) der unteren Lage liegt und daß wenn eine Rolle der unteren Lage von ihrem Platz weg oder zu ihren Platz hin bewegt wird, sie neben einer Bewegung in vertikaler Richtung auch in einer horizontalen Richtung unter die Rolle der oberen Lage bewegt wird.

2. Verfahren nach Anspruch 1, dadurch gekennzeichnet, daß die Papierrollen in dem Lager so angeordnet sind, daß wenn eine Rolle (3a) der unteren Schicht angehoben wird, die Hebebewegung entlang eines im wesentlichen gekrümmten Weges derart durchgeführt wird, daß die Hebebewegung zuerst in einer hauptsächlich geraden Aufwärtsrichtung, dann schräg zur Seite und nach oben und schließlich direkt nach oben verläuft.

3. Vorrichtung zur Handhabung von Papierrollen, bestehend aus einem Kran (1), der eine Hebemaschinerie (7) und eine Ladevorrichtung (8), die mit Hebeelementen, wie beispielsweise Haken (9) versehen ist, aufweist, und einem Lagerplatz (2) für Papierrollen (3), die in einer horizontalen Position gelagert sind, dadurch gekennzeichnet, daß die Papierrollen in der Lagervorrichtung in zwei Lagen so angeordnet sind, daß, mit Ausnahme der äußersten Enden der Reihen, jeder Rolle (3b) der oberen Lage in Längsrichtung der Reihen mindestens eine Rolle (3a) der unteren Lage vorangeht und nachfolgt.

4. Vorrichtung nach Anspruch 3, dadurch gekennzeichnet daß die Papierrollen im Lager in zwei Lagen so angeordnet sind, daß zwischen jeweils zwei Lagerplätzen für eine Rolle (3b) der oberen Lage es mindestens zwei Lagerplätze für eine Rolle (3a) der unteren Lage gibt.

5. Vorrichtung nach Anspruch 4, dadurch gekennzeichnet, daR die Lagerplätze für Rollen (3a) der unteren Lage aus gleichmäßig beabstandeten Stützen (4) bestehen, und daß die Lagerplätze für Rollen (3b) der oberen Lage aus gleichmäßig beabstandeten Stützen (5) bestehen, wobei dieser Abstand doppelt so groß wie der Abstand zwischen den Stützen (4) für die Rollen der unteren Lage ist.

## Revendications

1. Procédé pour la manutention de rouleaux de papier, dans lequel les rouleaux de papier stockés sont maintenus dans une position horizontale sur des supports (4,5) dans un stockage (2), caractérisé en ce que les rouleaux de papier sont stockés en deux étages d'une manière telle qu'un rouleau d'étage supérieur (3b) se trouve en partie au-dessus d'un rouleau d'étage inférieur (3a) et que, pendant le déplacement d'un rouleau d'étage inférieur pour l'amener à sa place ou l'en retirer, ce rouleau, en plus d'être déplacé dans une direction verticale, est également déplacé dans une direction horizontale au-dessous du rouleau d'étage supérieur.

2. Procédé suivant la revendication 1, caractérisé en ce que les rouleaux de papier sont agencés dans le stockage d'une manière telle que, pendant le levage d'un rouleau d'étage inférieur (3a), le mouvement de levage est effectué le long d'un chemin sensiblement curviligne de sorte que le mouvement de levage a d'abord lieu dans une direction principalement directement vers le haut, puis obliquement latéralement et vers le haut, et finalement directement vers le haut.

3. Appareil pour la manutention de rouleaux de papier , qui comprend un pont roulant (1), comportant un mécanisme de levage (7) et un dispositif de charge (8) pourvu d'éléments de levage tels que des crochets (9), et un espace de stockage (2) pour les rouleaux de papier (3) stockés dans une position horizontale, caractérisé en ce que les rouleaux de papier sont disposés en deux étages dans le stockage de sorte que, à l'exception des extrémités des rangées, chaque rouleau d'étage supérieur (3b) est précédé et suivi, dans la direction longitudinale de la rangée de rouleaux, par au moins un rouleau d'étage inférieur (3a).

4. Appareil suivant la revendication 3, caractérisé en ce que les rouleaux de papier sont disposés dans le stockage en deux étages de sorte que, entre deux places de stockage successives pour un rouleau d'étage supérieur (3b), il y a au moins deux places de stockage pour un rouleau d'étage inférieur (3a).

5. Appareil suivant la revendication 4, caractérisé en ce que les places de stockage pour les rouleaux d'étage inférieur (3a) sont constituées de supports (4) mutuellement équidistants, et les places de stockage pour les rouleaux d'étage supérieur (3b) sont constituées desupports (5) mutuellement équidistants, cette distance étant le double de la distance entre les supports (4) pour les rouleaux d'étage inférieur.
